# EUROPEAN PATENT SPECIFICATION

(11) **EP 1 616 480 B1**
(45) Date of publication and mention of the grant of the patent: **21.05.2014**
(21) Application number: 04425532.1
(22) Date of filing: 16.07.2004
(51) Int. Cl.: A01G 9/24

(54) **Glasshouse structure**
Gewächshausstruktur
Structure de serre

(43) Date of publication of application: 18.01.2006
(73) Proprietor: MC Sinergie S.r.l., 25010 Borgosatollo (Brescia) (IT)
(72) Inventor: Sandrini, Severino, 25010 Borgosatollo (Brescia) (IT)
(74) Representative: Crippa, Paolo Ernesto

(56) References cited:
- DE-B- 1 277 531
- DE-C- 687 798
- FR-A- 2 557 763

## Description

The present invention relates to a glasshouse and, more particularly, to a glasshouse structure with roof and aeration apertures as defined in the preamble of Claim 1 hereinbelow.

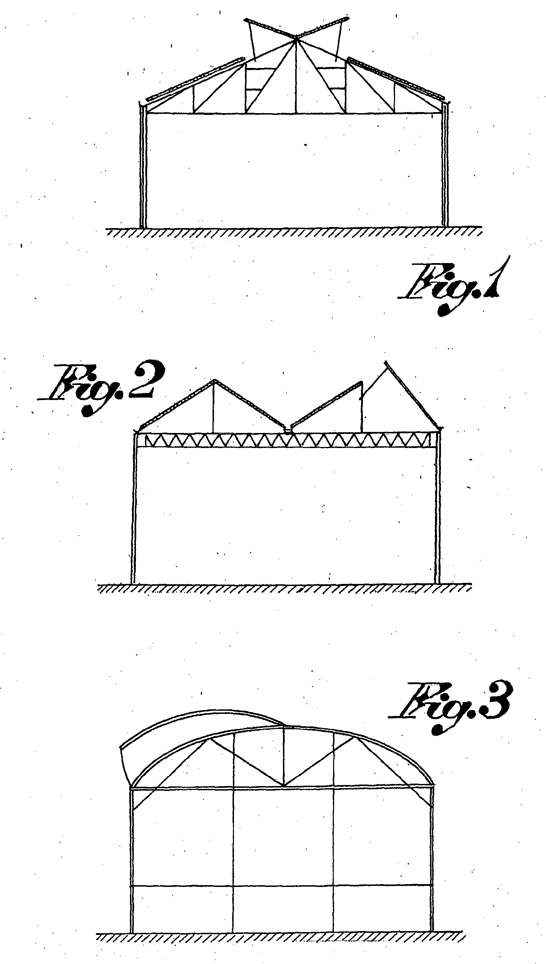

As is well known, a glasshouse is a fixed or movable construction constituted by a light carrying structure and a transparent coverage and serves to modify the environmental conditions in such a way as to obtain an environment suitable for growing plants. Industrial glasshouses can be substantially subdivided into three classes characterized by their constructional form: hut-shaped glasshouses, Dutch glasshouses and tunnel glasshouses, the profiles of which are shown, respectively, in Figures 1, 2 and 3 of the drawings attached hereto. Both the construction and the coverage materials have changed in the course of the years, but the basic forms have always remained the same. The hut-type glasshouse is characterized by vertical walls with a double-pitched roof, the Dutch glasshouse is characterized by vertical walls and a roof consisting of several double pitches, while the tunnel glasshouse is characterized by vertical walls and a vault-shaped roof. Apart from influencing the irradiation, the profile of the glasshouse determines also the aeration modality of the interior environment of the glasshouse. A correct air change is a fundamental aspect for obtaining healthy and qualitatively good cultivations as called for particularly in biological productions.

Typically, the aeration is obtained by means of apertures situated on the side walls and/or the roof. Such structures are known from DE 1277531B and DE 687798 C. In the examples shown in Figures 1, 2 and 3 the apertures are all on the roof and can be closed by means of panels that can be pivoted around horizontal axes and opened towards the outside. A system of closable apertures of this type effectively protects the internal environment against rain water only when it is in the closed position. In these conditions the internal temperature of the glasshouse may increase to values higher than those desired and can be lowered only by opening the windows. However, if one does not want the crops inside the glasshouse to be come wetted, the opening of the windows is possible only when the rain ceases. It should further be noted that, as a general rule, the upward rising air becomes accumulated under the roof and, in particular, under its ridge. Once the windows have been opened, it is essential for the re-establishment of normal environmental conditions that the air change should be effected as quickly as possible. For this reason the profile of the roof, the position of the aeration aperture and the conformation of the respective closing elements are very important for conveying the flow of hot air towards the exterior and achieving the air change as quickly as possible.

To this end the present-day structures are associated with some drawbacks. As already said, the hot air, accumulates under the roof and predominantly under its ridge (hut-shaped glasshouse, tunnel glasshouse) or under the ridges (Dutch glasshouse). At the opening of the windows the outflow of the hot air towards the outside is directed upwards in the case of glasshouse of the hut-shaped type (Figure 1) and the Dutch type (Figure 2), while it is directed sideways for the tunnel-type glasshouse (Figure 3). In all cases the air change is relatively slow, because the apertures are at the ridges of the roof and therefor have to permit the passage of large quantities of air towards the outside, especially if, on account of bad weather, the glasshouse remained closed for a long time. The most critical situation is that of the tunnel glasshouse, because the curved shape of the roof and the lateral apertures render the outflow of the air even slower.

The principal object of the present invention is to make available a glasshouse structure that assures a rapid air change and continuous ventilation even in the event of bad weather.

According to the invention, this object is attained by realizing a glasshouse structure as defined and characterized in general terms in Claim 1.

The invention will be more readily understood from the following detailed description of an embodiment thereof, which is given by way of example and is not therefore to be considered limitative in any way, the description making reference to the attached drawings, of which:
Figures 1, 2 and 3 show the profiles three known glasshouses,
Figure 4 is a front elevation of a glasshouse structure in accordance with the invention, and
Figure 5 is a perspective view of the same glasshouse structure in accordance with the invention.

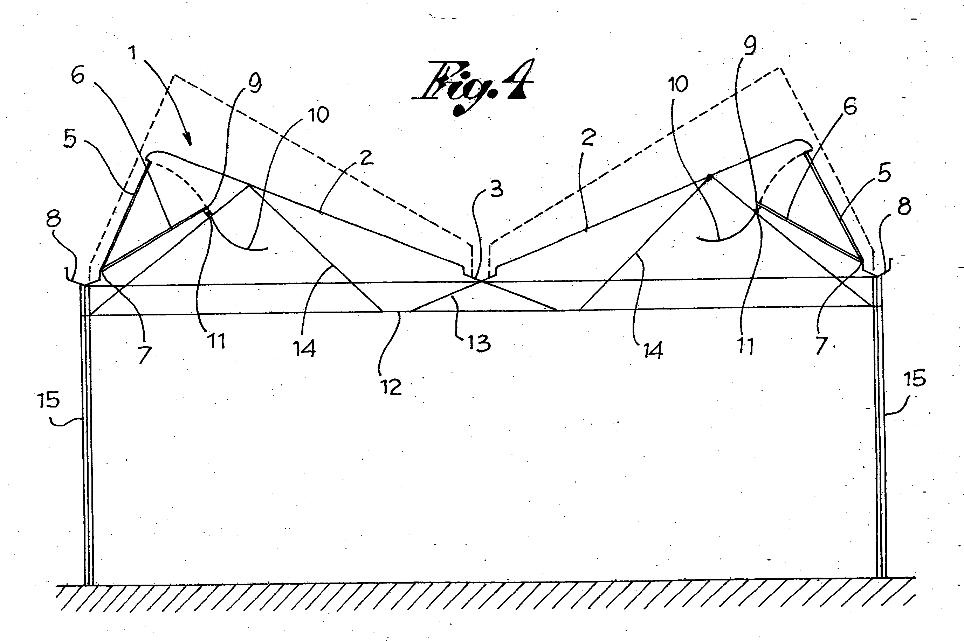

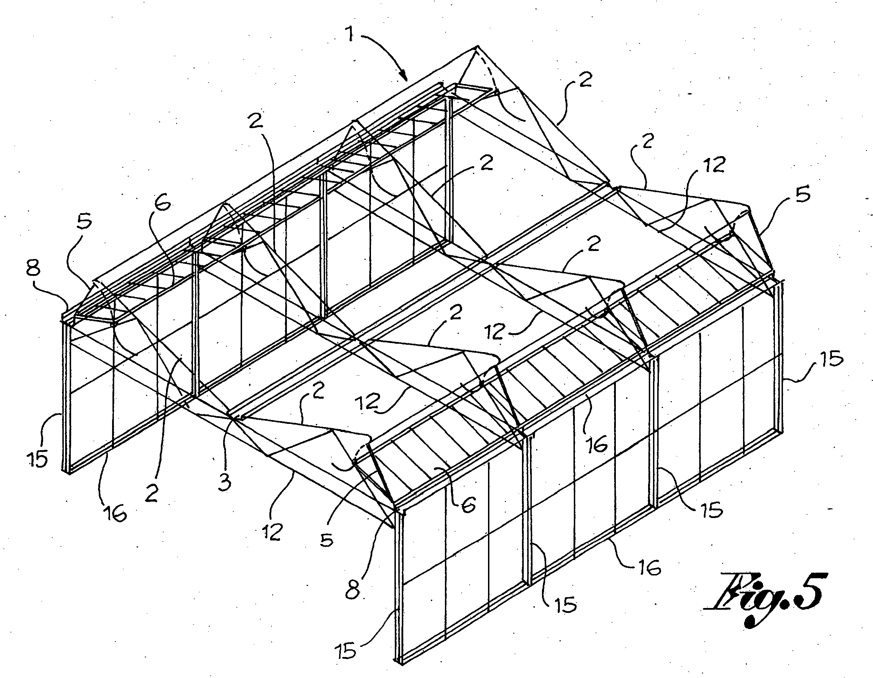

Referring to Figures 4 and 5, the glasshouse structure of this example comprises a four-pitched roof 1 arranged in such a manner as to substantially form a profile like a seagull's wings, roof-carrying structure 12, vertical supporting elements 15 and longitudinal connection elements 15. The roof has two internal pitches 2 that converge at the centre, merging into a drainage channel 3 and terminating each with a curved section that links with one of the external pitches. The external pitches in this example are to considerable part occupied by the aeration apertures, or windows, the closing of which is obtained by means of respective mobile elements. In the example these closure elements are two drop-leafs 6 hinged in proximity of the lower end of the respective internal pitches of the roof and capable of moving towards the interior of the glasshouse. More precisely, each drop-leaf 6 has an end that is constrained to the carrying structure in a manner pivotable around a horizontal axis 7 in proximity of another drainage channel 8. Hooked onto the free end 9 of the drop-leaf is a manipulation arm 10 that has a curvilinear profile and is capable of sliding in a guidance element 11 fixed to the carrying structure 12 that acts also as a stop for the drop-leaf. This structure 12 is constituted of various triangular trusses made up of tubular metal elements. A central truss 23 sustains the roof 1 along the central drainage channel 3 and two lateral trusses 14 sustain the two internal pitches of the roof. The guidance elements 11 of the manipulation arms 10 of the drop-leaves are fixed to the lateral trusses 14.

The internal pitches are formed by sheets of transparent material, polyethylene for example, stretched between tubular metallic elements. In this example each drop-leaf is constituted by a single mobile element having a length equal to that of the glasshouse and formed by a framework that sustains a multiplicity of panels placed side by side, the panels being likewise made of transparent material, for example rigid or flexible plastic material, or also glass. The side walls of the structure may likewise be made of panels of the same transparent material mounted between the vertical supporting elements 16. Provision is also made for the installation of anti-hail or shading nets or cloths (broken lines in Figure 1) hooked to structural elements that substantially follow the profile of the roof shaped in the manner of a seagull's wings.

The roof profile and the disposition of the windows are such as to assure an efficient air change in all circumstances. In particular, the hot air tends to rise towards the roof and, following the profile of the two internal pitches, is quickly guided towards the exterior through the apertures. The fresh air enters through the same apertures and quickly reaches the interior environment of the glasshouse. It has been found that the air change takes place with greater frequency than in the case of prior art glasshouses, so that it becomes simpler for a constant ventilation and uniform climatic conditions to be maintained inside the glasshouse. Furthermore, the drop-leafs 6 that open towards the inside until they assume a position inclined towards the lateral drainage channels 8 assure that the crops will be protected even in the case of precipitations, so that the aeration of the glasshouse can be maintained even during these precipitations.

The opening of the windows towards the interior also makes it possible to arrange anti-hail or shading nets very close to the roof, so that the final height of the structure does not greatly exceed that of the glasshouse in the proper sense of the term, with the result of limiting the environmental impact on the countryside of these structures and assuring a greater resistance of the structure to wind.

The object of the invention is fully attained, because the four-pitched roof profile shaped in the manner of a seagull's wings and the aeration apertures present on the two external pitches with inward-opening drop-leaves assure a rapid air change and aeration of the internal environment even in the case of rain. Furthermore, the definitive structure is compact and of a relatively limited height even when further protective structure are installed on the roof.

Although only a single embodiment of the invention has here been described, it is clear that numerous variants and modifications can be introduced without overstepping the inventive concept. For example, the place of a single aperture on each of the external pitches could be taken by several, each with an independently closing drop-leaf, or, maintaining always a single aperture on each external pitch, in place of a single drop-leaf there could be provided several that are independent of each other.

## Claims

1. A glasshouse structure comprising a roof (1) and aeration apertures (5) with respective closure elements (6), the roof comprising four pitches arranged to form a profile substantially in the manner of a seagull's wings, the aeration apertures (5) being situated on the external pitches of the roof, the respective closure elements (6) comprising drop-leaves hinged in proximity of lower ends of the respective external pitches and capable of moving towards the interior of the glasshouse, **characterised in that** each drop-leaf has an end that is constrained to the carrying structure in a manner pivotable around a horizontal axis (7) in proximity of a drainage channel (8), and **in that** hooked onto a free end (9) of the drop-leaf is a manipulation arm (10) capable of sliding in a guidance element (11) fixed to the carrying structure (12) that acts also as a stop for the drop-leaf.

2. A glasshouse structure in accordance with claim 1, wherein the guidance elements (11) of the manipulation arms (10) of the drop-leaves are fixed to lateral trusses (14) of the structure.

3. A glasshouse structure in accordance with Claim 1 of 2, wherein each of the aeration apertures (5) extends substantially along the entire glasshouse structure.

4. A glasshouse structure in accordance with Claim 3, wherein each of the aeration apertures (5) has as its respective closure element a single drop-leaf.

5. A glasshouse structure in accordance with Claim 3, wherein each of the aeration apertures (5) has as its respective closure element a multiplicity of independent drop-leaves.

6. A glasshouse structure in accordance with Claim 1, wherein the two internal pitches of the roof merge into a central drainage channel (3) and the two external pitches each merges into another drainage channel (8).

## Patentansprüche

1. Gewächshausstruktur, die ein Dach (1) und Belüftungsöffnungen (5) mit jeweiligen Verschlusselementen (6) umfasst, wobei das Dach vier Dachneigungen umfasst, die angeordnet sind, um ein Profil im Wesentlichen in der Art von Seemöwenflügeln zu bilden, wobei die Lüftungsöffnungen (5) auf den äußeren Dachneigungen des Dachs gelegen sind, wobei die jeweiligen Verschlusselemente (6) Klappen umfassen, die in nächster Nähe der unteren Enden der jeweiligen äußeren Dachneigungen eingehängt sind und fähig sind, sich in Richtung des Inneren des Gewächshauses zu bewegen, **dadurch gekennzeichnet, dass** jede Klappe ein Ende hat, das in einer Weise an die tragende Struktur gefesselt ist, dass sie um eine horizontale Achse (7) in nächster Nähe eines Entwässerungskanals (8) schwenkbar ist und dass an einem freien Ende (9) der Klappe ein Handhabungsarm (10), der fähig ist, in einem an der tragenden Struktur (12) fixierten Führungselement (11) zu gleiten, eingehakt ist, der auch als ein Anschlag für die Klappe wirkt.

2. Gewächshausstruktur nach Anspruch 1, wobei die Führungselemente (11) der Handhabungsarme (10) der Klappen an seitlichen Trägern (13) der Struktur fixiert sind.

3. Gewächshausstruktur nach Anspruch 1 oder 2, wobei jede der Belüftungsöffnungen (5) sich im Wesentlichen entlang der gesamten Gewächshausstruktur erstreckt.

4. Gewächshausstruktur nach Anspruch 3, wobei jede der Belüftungsöffnungen (5) ihr jeweiliges Verschlusselement in einer einzigen Klappe hat.

5. Gewächshausstruktur nach Anspruch 3, wobei jede der Belüftungsöffnungen (5) ihr jeweiliges Verschlusselement in einer Vielzahl von unabhängigen Klappen hat.

6. Gewächshausstruktur nach Anspruch 1, wobei die zwei inneren Dachneigungen des Dachs sich zu einem zentralen Entwässerungskanal (3) vereinigen und die zwei äußeren Dachneigungen sich jeweils zu dem Entwässerungskanal (8) vereinigen.

## Revendications

1. Structure de serre comprenant un toit (1) et des ouvertures d'aération (5) dotées d'éléments de fermeture (6) respectifs, le toit comprenant quatre pentes agencées pour former un profil sensiblement à la manière d'ailes de mouette, les ouvertures d'aération (5) étant situées sur les pentes externes du toit, les éléments de fermeture (6) respectifs comprenant des abattants articulés à proximité d'extrémités inférieures des pentes externes respectives et capables de se déplacer vers l'intérieur de la serre, **caractérisée en ce que** chaque abattant a une extrémité qui est contrainte à la structure porteuse de manière pivotante autour d'un axe horizontal (7) à proximité d'un canal de drainage (8), et **en ce qu'**un bras de manipulation (10) accroché sur une extrémité libre (9) de l'abattant est capable de coulisser dans un élément de guidage (11) fixé à la structure porteuse (12) qui agit également comme une butée pour l'abattant.

2. Structure de serre selon la revendication 1, dans laquelle les éléments de guidage (11) des bras de manipulation (10) des abattants sont fixés à des fermes latérales (14) de la structure.

3. Structure de serre selon la revendication 1 ou 2, dans laquelle chacune des ouvertures d'aération (5) s'étend sensiblement le long de la totalité de la structure de serre.

4. Structure de serre selon la revendication 3, dans laquelle chacune des ouvertures d'aération (5) comporte comme son élément de fermeture respectif un abattant unique.

5. Structure de serre selon la revendication 3, dans laquelle chacune des ouvertures d'aération (5) comporte comme son élément de fermeture respectif une multiplicité d'abattants indépendants.

6. Structure de serre selon la revendication 1, dans laquelle les deux pentes internes du toit se rejoignent en un canal de drainage central (3) et les deux pentes externes se rejoignent chacune dans un autre canal de drainage (8).
